# EUROPÄISCHE PATENTSCHRIFT

(11) **EP 3 679 288 B1**
(45) Veröffentlichungstag und Bekanntmachung des Hinweises auf die Patenterteilung: **03.01.2024**
(21) Anmeldenummer: 18769960.8
(22) Anmeldetag: 07.09.2018
(51) Int. Cl.: F16M 1/00, B65D 19/00, F04D 29/00

(54) **TRAGRAHMEN FÜR EINEN PUMPENSTAND ZUR AUFNAHME VON VAKUUMPUMPEN UND HAUPTTRAGRAHMEN FÜR EINE BESCHICHTUNGSVORRICHTUNG VON BEHÄLTERN UND BESCHICHTUNGSVORRICHTUNG**
SUPPORT FRAME FOR A PUMP STAND FOR RECEIVING VACUUM PUMPS, AND MAIN SUPPORT FRAME FOR A COATING DEVICE FOR CONTAINERS, AND COATING DEVICE
CADRE PORTEUR POUR UN SUPPORT DE POMPES LOGEANT DES POMPES À VIDE, CADRE PORTEUR PRINCIPAL POUR UN DISPOSITIF DE REVÊTEMENT DE RÉCIPIENTS ET DISPOSITIF DE REVÊTEMENT

(30) Priorität: 07.09.2017 DE 102017120655
(43) Veröffentlichungstag der Anmeldung: 15.07.2020
(73) Patentinhaber: KHS GmbH, 44143 Dortmund (DE)
(72) Erfinder: KYTZIA, Sebastian, 23826 Todesfelde (DE); HERBORT, Michael, 20535 Hamburg (DE)
(74) Vertreter: Eisenführ Speiser
(86) Internationale Anmeldenummer: PCT/EP2018/074077
(87) Internationale Veröffentlichungsnummer: WO 2019/048584

(56) Entgegenhaltungen:
- DE-A1- 2 458 287
- DE-A1-102012 112 815
- DE-A1-102014 000 145
- DE-U1- 20 315 321

## Beschreibung

Die vorliegende Erfindung betrifft einen Tragrahmen für einen Pumpenstand zur Aufnahme von Vakuumpumpen für eine Beschichtungsvorrichtung von Behältern mittels eines Beschichtungsverfahrens nach Anspruch 1, einen Haupttragrahmen für eine solche Beschichtungsvorrichtung nach Anspruch 3 sowie eine Beschichtungsvorrichtung nach Anspruch 10.

Aus der DE 10 2012 112 815 A1 ist ein Prozessaggregat zur Unterstützung und Durchführung einer verfahrenstechnischen Grundoperation für eine chemische Reaktion bekannt. Das Prozessaggregat weist einen Tragrahmen mit einem Gestell auf, in dem eine Pumpe aufgenommen ist. Der Tragrahmen weist Auflagevorrichtungen auf, an denen lösbare Auflagestreben für die Anbringung von Pumpen angeordnet sind. Das Gestell weist Füße auf, die sich an der Unterseite von einer Auflagestrebe aus nach unten erstrecken und die mit dem Betrag Rahmen verbunden sind.

Die DE 10 2014 000 145 A1 zeigt ein modulares und kombinierbares Gestell für großformatige und schwerlastige Stückgüter, wobei dieses Gestell zum Beispiel für den Transport von Zugachsen einsetzbar ist.

Aus dem Stand der Technik sind auch Behälterbeschichtungsvorrichtungen bekannt, die unter anderem zum Beschichten der Innenflächen von Behältern, wie PET-Flaschen, verwendet werden. Diese Beschichtung erfolgt mittels eines Beschichtungsverfahrens, für das unter anderem ein Vakuum erzeugt werden muss, insbesondere mittels eines CVD-Verfahrens (Chemical Vapor Deposition). Die für die Erzeugung benötigten Vakuumpumpen lassen sich aufteilen in solche, die zur Erzeugung eines Vorvakuums benötigt werden und solche, die zur Erzeugung eines Prozessvakuums benötigt werden. Solche Pumpenanordnungen aus mehreren Vakuumpumpen werden regelmäßig alle separat aufgestellt und so miteinander und mit einer Behälterbehandlungsmaschine verbunden, so dass in dieser das Beschichtungsverfahren durchgeführt werden kann und die Innenseiten der Behälter bedampft werden. Je nach Anordnung der Vakuumpumpen sind diese nur schwer zugänglich oder an voneinander entfernten Orten innerhalb der Gesamtanlage angeordnet.

Es ist die Aufgabe der vorliegenden Erfindung, eine Vorrichtung zur Verfügung zu stellen, die einen einfachen Zugriff auf die Vakuumpumpen und eine schnelle Austauschbarkeit derselben ermöglicht.

Diese Aufgabe wird erfindungsgemäß durch einen Tragrahmen mit den Merkmalen des Patentanspruchs 1 gelöst. Danach ist vorgesehen, dass an einem Gestell Auflagestreben für die lösbare Verbindung mit mindestens zwei Auflagevorrichtungen ausgebildet sind, auf denen jeweils lösbar eine Vakuumpumpe anbringbar ist, und die Füße aufweist, die sich von den untersten Auflagestreben nach unten erstrecken und die lösbare Befestigungsvorrichtungen zur Verbindung mit einem Haupttragrahmen der Beschichtungsvorrichtung aufweisen. Dadurch können die auf den Auflagevorrichtungen angeordneten Vakuumpumpen leicht von dem Gestell entfernt werden; außerdem sind die Vakuumpumpen in unmittelbarer Nähe und gut zugänglich positioniert. Dadurch, dass die Auflagevorrichtungen einen rechteckigen Querschnitt aufweisen, der geringfügig größer ist als der Querschnitt eines Gabelzinken eines Hubwagens oder eines Gabelstaplers und die so weit voneinander in horizontaler Richtung beabstandet sind, dass die Gabelzinken eines Hubwagens oder eine Staplergabel eines Gabelstaplers in sie mit geringem Spiel einfahrbar sind, können die einzelne Vakuumpumpen sehr einfach durch einen Hubwagen oder einen Gabelstapler entfernt beziehungsweise eingesetzt werden.

Eine vorteilhafte Weiterbildung der Erfindung sieht vor, dass der Tragrahmen zwei Auflagevorrichtungen zur Aufnahme von Vorvakuum-Pumpen oder drei Auflagevorrichtungen zur Aufnahme von Prozessvakuum-Pumpen aufweist. Damit sind die hinsichtlich ihrer Funktion zusammengehörenden Vakuumpumpen in direkter räumlicher Nähe zueinander und können gut zusammen gewartet werden.

Die Aufgabe wird auch durch einen Haupttragrahmen mit den Merkmalen des Patentanspruchs 3 gelöst. Danach ist vorgesehen, dass der Haupttragrahmen mit horizontalen und vertikalen Trägern ausgestattet ist, die in einem Vakuumbereich so zueinander angeordnet sind, dass in einer Seitenfläche des Haupttragrahmens eine erste Öffnung gebildet wird, deren Höhe größer ist als die Höhe des erfindungsgemäßen Tragrahmens für einen Pumpenstand. Dadurch kann der Tragrahmen für einen Pumpenstand als Ganzes sehr einfach aus dem Haupttragrahen entfernt werden, indem er durch die erste Öffnung mittels eines Hubwagens oder eines Gabelstaplers gehoben wird.

Eine vorteilhafte Weiterbildung des erfindungsgemäßen Haupttragrahmens sieht vor, dass er eine erste Öffnung hat, in der ein Tragrahmen für Vorvakuum-Pumpen angeordnet ist, und eine zweite, benachbart zur ersten Öffnung ausgebildete zweite Öffnung hat, in der ein Tragrahmen für Prozessvakuum-Pumpen angeordnet ist, wobei die beiden Öffnungen durch einen ersten vertikalen Träger voneinander getrennt sind. Damit können die in ihren Funktionen unterschiedlichen Vakuumpumpen-Ensembles problemlos voneinander getrennt aus dem Haupttragrahmen entfernt oder in ihn eingesetzt werden und sind trotzdem sehr nah bei einander, so dass ein gleichzeitiger Zugriff auf alle möglich ist.

Eine weitere vorteilhafte Weiterbildung des erfindungsgemäßen Haupttragrahmens sieht vor, dass er im Bereich der ersten Öffnung und/oder der zweiten Öffnung ein Bodenelement aufweist, das Befestigungsmittel zur lösbaren Verbindung mit den Tragrahmen für einen Pumpenstand aufweist. Damit können die Tragrahmen für die Pumpenstände sehr einfach und trotzdem sicher mit dem Haupttragrahmen verbunden und auch wieder problemlos von diesem gelöst werden.

Eine weitere vorteilhafte Weiterbildung des erfindungsgemäßen Haupttragrahmens sieht vor, dass er im Bereich der ersten Öffnung und/oder der zweiten Öffnung einen horizontalen unteren ersten Träger aufweist, der mindestens auf eine oder mehrere Teillängen einen Abstand zum Boden aufweist, der mindestens 3 cm, idealerweise mehr als 5 cm beträgt. Damit kann ein Hubwagen nach vorherigem Anheben seiner Gabel auf eine Höhe, die über der Oberkante des horizontalen unteren Trägers liegt, mit seinen Stützrollen unter diesen Träger gefahren werden und seine Gabel kann in die Auflagevorrichtungen der einzelnen Vakuumpumpen eingeführt werden, so dass einzelnen Pumpen samt ihrer Auflagevorrichtungen - nach deren Lösen von den Auflagestreben des Tragrahmens - in sehr einfacher Art und Weise aus dem Haupttragrahmen entfernt und auch wieder in diesen zurückgebracht werden können.

Eine weitere vorteilhafte Weiterbildung des erfindungsgemäßen Haupttragrahmens sieht vor, dass die weiteren unteren horizontalen Träger ebenfalls horizontal ausgerichtet sind, aber keinen Abstand zum Boden bzw. nur flache Dämpfungs- oder Höhenausgleichselemente aufweisen. Dadurch kann eine einfache und stabile Konstruktion des Haupttragrahmens erreicht werden, da seine unteren Träger fast über den gesamten Bereich auf dem Boden aufliegen und nur in dem Bereich der Öffnung beziehungsweise der Öffnungen, hinter denen die Vakuumpumpen in ihren Tragrahmen angeordnet sind, ein Abstand des dortigen unteren horizontalen Trägers vorhanden ist, damit auch ein Hubwagen die dort angeordneten Vakuumpumpen aus dem Haupttragrahmen entfernen oder in diesen einbringen kann.

Eine weitere vorteilhafte Weiterbildung des erfindungsgemäßen Haupttragrahmens sieht vor, dass in dem Tragrahmen beziehungsweise den Tragrahmen alle für die Durchführung des Beschichtungsverfahrens notwendigen Vorvakuum-Pumpen und Prozessvakuum-Pumpen lösbar mit diesen verbunden sind. Damit können diese alle einzeln aus dem Haupttragrahmen entfernt oder in diesen eingebracht werden.

Die Aufgabe wird auch durch eine Beschichtungsmaschine mit den Merkmalen des Patentanspruchs 10 gelöst. Danach ist vorgesehen, dass bei einer solchen Maschine ein Haupttragrahmen gemäß einer der genannten Ausführungsformen umfasst ist. Vorteilhafterweise wird auch mindestens eine der Ausführungsformen der genannten Tragrahmen vorgesehen.

Alle in den Unteransprüchen angegebenen Merkmale der vorteilhaften Weiterbildungen sind sowohl für sich jeweils einzeln als auch in beliebigen Kombinationen zur Erfindung gehörig.

Weitere Einzelheiten und Vorteile der Erfindung werden anhand von in den Zeichnungen dargestellten Ausführungsbeispielen näher erläutert.

Es zeigen:
- Figur 1: eine perspektivische Ansicht eines erfindungsgemäßen Haupttragrahmens,
- Figur 2: eine perspektivische Ansicht eines erfindungsgemäßen Tragrahmens mit eingesetztem Ensemble aller Vorvakuum-Pumpen,
- Figur 3: eine perspektivische Ansicht eines erfindungsgemäßen Tragrahmens mit eingesetztem Ensemble aller Prozessvakuum-Pumpen und
- Figur 4: eine schematische Ansicht eines weiteren Ausführungsbeispiels eines erfindungsgemäßen Haupttragrahmens mit zwei eingesetzten Tragrahmen.

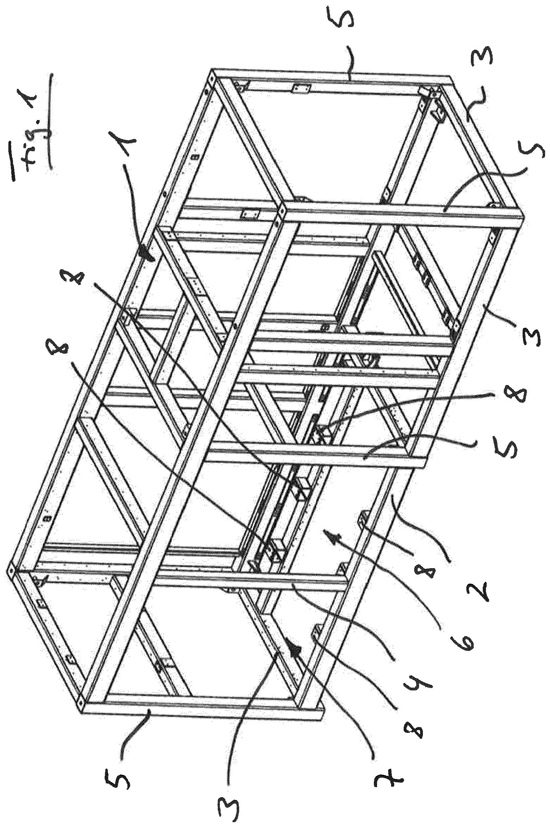

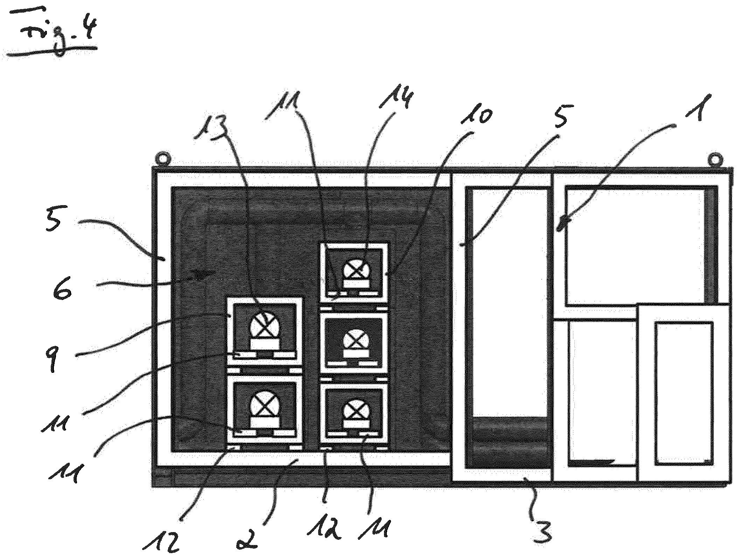

Figur 1 zeigt einen erfindungsgemäßen Haupttragrahmen 1 für eine Beschichtungsvorrichtung von Behältern mittels eines Beschichtungsverfahrens. Da die vorliegende Erfindung sich nur auf den Teil der Beschichtungsvorrichtung bezieht, der mit der Erzeugung des für das Beschichtungsverfahren notwendigen Vakuums befasst, werden die anderen Komponenten der Beschichtungsvorrichtung nicht näher erläutert. Der für die Erfindung hauptsächlich relevante Teil des Haupttragrahmens 1 ist in Figur 1 links zu sehen. Im rechten Teil ist ein Förderband für die zu beschichtenden Behälter, die Beschichtungsvorrichtung an sich und ein Übergabesystem angeordnet, das die Behälter zwischen Förderband hin und her bewegt. Diese Elemente sind - da sie nicht erfindungsrelevant sind - nicht dargestellt. Dasselbe gilt auch für das weitere Ausführungsbeispiel eines erfindungsgemäßen Haupttragrahmens gemäß Figur 4.

Der Haupttragrahmen 1 ist im Wesentlichen quaderförmig ausgebildet und weist hierfür horizontale Träger 2, 3 und vertikale Träger 4, 5 auf, deren äußere Vertreter - bis auf die im Folgenden erläuterte Ausnahme - den Quader aufspannen. In seinem linken, dem Betrachter zugewandten Teil ist jedoch ein unterer erster horizontaler Träger 2 nicht in derselben Ebene angeordnet, wie die weiteren horizontalen unteren Träger 3, die auf dem Boden aufliegen. Dieser erste horizontale Träger 2 ist in einem Abstand von 7 cm über dem Boden angebracht. Damit wird es ermöglicht, dass die Rollen eines Hubwagens samt den Fortsätzen, an denen sie befestigt sind, unter diesen ersten horizontalen Träger 2 geschoben werden können und somit die Gabelzinken des Hubwagens in den Innenraum des Haupttragrahmens 1 eingreifen können.

Der linke, dem Betrachter zugewandte Teil weist einen ersten vertikalen Träger 4 auf, der in diesem Bereich eine erste Öffnung 6 rechts von ihm - die rechts von einem weiteren vertikalen Träger 5 begrenzt wird - und eine zweite Öffnung 7 links von ihm - die links durch einen weiteren vertikalen Träger 5, einen der vier Eckträger, begrenzt wird - voneinander trennt. Näheres zu der Funktion dieser beiden Öffnungen 6, 7 und deren Abmessungen folgt bei der Beschreibung zu Figur 4.

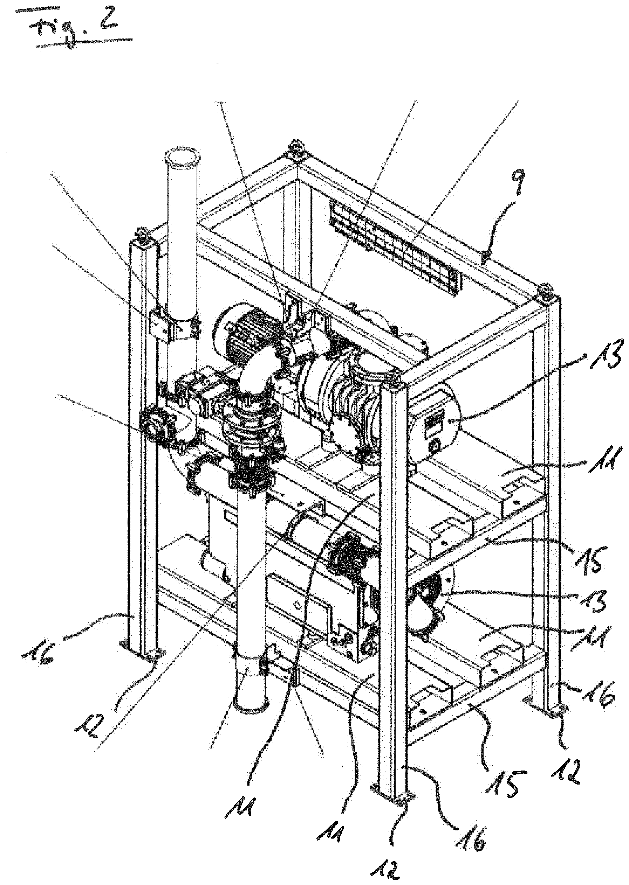

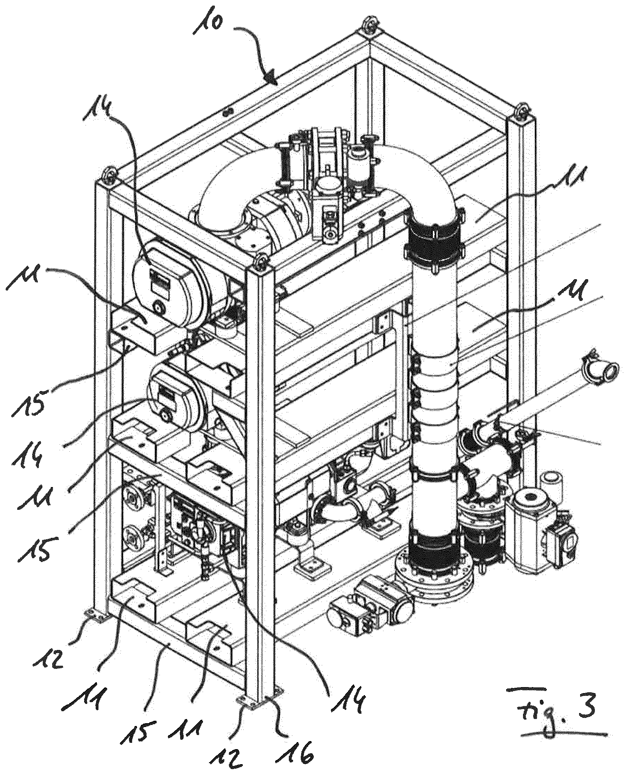

Im Bereich hinter den beiden Öffnungen 6, 7 sind im unteren Bereich eine Reihe von Befestigungsmitteln 8 vorhanden, die dazu dienen, einen der in den Figuren 2 und 3 dargestellten Tragrahmen 9, 10 lösbar aber sicher mit dem Haupttragrahmen 1 zu verbinden. Nicht dargestellt ist ein Bodenelement, das mit den Befestigungsmitteln 8 verbunden ist und sich horizontal erstreckt.

In Figur 2 ist ein Tragrahmen 9 dargestellt, der zwei Vorvakuum-Pumpen 13 trägt. An den Vorvakuum-Pumpen 13 sind zusätzliche Elemente vorhanden, wie Rohre, die aber nicht erfindungswesentlich sind und deshalb nicht näher erläutert werden.

Jede der beiden Vorvakuum-Pumpen 13 ist auf zwei Auflagevorrichtungen 11 angeordnet, die wiederrum über Auflagestreben 15 - diese können sowohl in Längsals auch in Querrichtung ausgerichtet sein - an dem Tragrahmen 9 befestigt. Die Auflagevorrichtungen 11 sind lösbar mit den Auflagestreben 15 verbunden. Sie sind hohl und nach vorne hin offen, wobei ihr Querschnitt rechteckig ist und von der Größe so gehalten ist, dass die Gabelzinken eines Hubwagens oder die Staplergabel eines Gabelstaplers problemlos in sie einfahren können. Damit dies funktioniert, sind die beiden jeweils einer Vorvakuum-Pumpe 13 zugeordneten Auflagevorrichtungen 11 in einem solchen Abstand zueinander angeordnet, der demjenigen der vorgenannten Gabelzinken beziehungsweise Staplergabel entspricht.

Unterhalb der unteren Auflagestrebe 15 erstrecken sich an den Ecken jeweils ein Fuß 16 nach unten. Am unteren Ende jedes Fußes 16 ist eine Befestigungsvorrichtung 12 ausgebildet, mittels der der Tragrahmen 9 lösbar mit den Befestigungsmitteln 8 im Bodenbereich des Haupttragrahmens 1 verbindbar ist (siehe hierzu Figur 1).

Die verwendbaren lösbaren Befestigungen - beispielsweise Schraubverbindungen - zwischen Vorvakuum-Pumpen 13 und Auflagevorrichtungen 11 sowie zwischen Befestigungsvorrichtungen 12 und Befestigungsmitteln 8 sind dem Fachmann gut bekannt und werden deshalb nicht näher beschrieben. Näheres zu den Abmessungen folgt bei der Beschreibung zu Figur 4.

In Figur 3 ist ein Tragrahmen 10 dargestellt, der drei Prozessvakuum-Pumpen 14 trägt. An den Prozessvakuum-Pumpen 14 sind zusätzliche Elemente vorhanden, wie Rohre, die aber nicht erfindungswesentlich sind und deshalb nicht näher erläutert werden.

Prinzipiell erfolgt die Verbindung der Prozessvakuum-Pumpen 14 mit dem Tragrahmen 10 gleich wie zu Figur 2 beschrieben: sie sind lösbar auf Auflagevorrichtungen 11 montiert, welche wiederum lösbar mit an dem Tragrahmen 10 ausgebildeten Auflagestreben 15 verbunden sind.

Auch die lösbare Verbindung des Tragrahmens 10 für die Prozessvakuum-Pumpen 14 mit dem Haupttragrahmen 1 erfolgt gleich wie diejenige des Tragrahmens 9 für die Vorvakuum-Pumpen 13 mit dem Haupttragrahmen 1: Am unteren Ende von Füßen 16, die sich unterhalb der untersten Auflagestrebe 15 erstrecken, sind Befestigungsvorrichtungen 12 ausgebildet, die mit den Befestigungsmitteln 8 an dem Haupttragrahmen 1 verbindbar sind. Der Unterschied besteht darin, dass die Füße in der Figur 4 äußerst kurz sind; dies kann soweit gehen, dass die Befestigungsvorrichtungen 12 direkt unterhalb der untersten Auflagestrebe 15 angeordnet sind und somit selbst den Fuß 16 darstellen.

Die verwendbaren lösbaren Befestigungen - beispielsweise Schraubverbindungen - zwischen Prozessvakuum-Pumpen 14 und Auflagevorrichtungen 11 sowie zwischen Befestigungsvorrichtungen 12 und Befestigungsmitteln 8 sind dem Fachmann gut bekannt und werden deshalb nicht näher beschrieben. Näheres zu den Abmessungen folgt bei der Beschreibung zu Figur 4.

In Figur 4 ist ein stark schematisch dargestelltes weiteres Ausführungsbeispiel eines erfindungsgemäßen Haupttragrahmens 1 dargestellt, der nur eine erste Öffnung 6 aufweist - im Unterschied zur Figur 1 fehlt hier der erste vertikale Träger 4. In dem Raum hinter der ersten Öffnung 6 sind - stark schematisch dargestellt - die Tragrahmen 9, 10 gemäß den Figuren 2 und 3 mit dem Haupttragrahmen 1 verbunden.

Wie in Figur 1 ist der linke untere erste horizontale Träger 2 nicht in der Ebene der weiteren unteren horizontalen Träger 3 - also auf dem Boden aufliegend - angeordnet, sondern beabstandet davon. Der Abstand ist gleich groß wie derjenige der Figur 1, so dass auch hier ein Hubwagen unter diesem eingeschoben werden kann, so dass seine Gabelzinken in die erste Öffnung 6 einfahren.

Um eine oder mehrere der vorhandenen Pumpen 13, 14 aus dem Haupttragrahmen entfernen zu können, müssen die Verbindungen zwischen der/den fraglichen Pumpen(n) 13, 14 und den damit verbundenen Zusatzteilen, wie beispielsweise die Rohre, gelöst und eventuell auch entfernt werden. Nachdem dies erfolgt ist, hängt das weitere Vorgehen davon ab, welche Pumpe(n) 13, 14 entfernt werden soll(en).

Exemplarisch wird ein solcher Vorgang für die mittlere Prozessvakuum-Pumpe 14 beschrieben: Die Schraubverbindungen zwischen den Auflagevorrichtungen 11, auf denen diese Prozessvakuum-Pumpe 14 steht, und den Auflagestreben 15 - die Schraubverbindungen können auch nur an einer Auflagestrebe 15, bevorzugt der vorderen, vorhanden sein - auf denen diese Auflagevorrichtungen 11 liegen, werden gelöst. Danach wird ein Hubwagen so unter den ersten horizontalen Träger 2 geschoben, dass seine Gabelzinken in die offenen Auflagevorrichtungen 11 einfahren. Danach kann die Prozessvakuum-Pumpe 14 zusammen mit ihren Auflagevorrichtungen 11 leicht angehoben werden und der Hubwagen kann wieder herausgefahren werden. Das Einfahren der Gabelzinken des Hubwagens kann auch vor dem Lösen der Schraubverbindungen erfolgen. Anstatt die Prozessvakuum-Pumpe 14 mittels eines Hubwagens zu entfernen, kann auch ein Gabelstapler verwendet werden, wenn es der vorhandene Raum zulässt. In die vorhandene Lücke kann dann eine andere Prozessvakuum-Pumpe 14 oder dieselbe nach beispielsweise einer Wartung oder Reparatur eingebracht werden; hierzu werden die vorgenannten Schritte in umgekehrter Reihenfolge durchgeführt.

Es kann auch mehr als eine der vorhandenen Pumpen 13, 14 gleichzeitig entfernt werden. Beispielhaft wird dies anhand der Entfernung des gesamten Pumpenstandes für die Vorvakuum-Pumpen 13 erläutert. Hierzu werden nicht die Schraubverbindungen zwischen Auflagevorrichtungen 11 und Auflagestreben 15 gelöst, sondern diejenigen zwischen den Befestigungsvorrichtungen 11 des Tragrahmens 9 und den Befestigungsmitteln 8 am Haupttragrahmen 1. Nun kann der gesamte Tragrahmen 9 herausbewegt werden, indem die Gabelzinken des Hubwagens oder die Staplergabel des Gabelstaplers in die Öffnungen der Auflagevorrichtungen 11 eigeführt werden und der gesamte Pumpenstand so weit angehoben wird, dass seine Füße 16 sich oberhalb der oberen Kannte des ersten horizontalen Trägers 2 befinden und dann herausgezogen werden.

Problematischer ist dies bei dem Pumpenstand für die Prozessvakuum-Pumpen 14, da dessen Tragrahmen 10 bedeutend höher ist, da er drei Prozessvakuum-Pumpen 14 aufnehmen muss. Deshalb ist es erfindungsgemäß nötig, dass die Höhe des Tragrahmens 9, 10 kleiner ist als die Höhe der diesem zugeordneten ersten/zweiten Öffnung 6, 7.

Die Erfindung ermöglicht demnach einen sehr einfachen Austausch von einzelnen Pumpen 13, 14 aber auch von ganzen Pumpenständen mit sehr geringem Aufwand.

### Bezugszeichenliste

- 1: Haupttragrahmen
- 2: erster horizontaler Träger
- 3: weiterer horizontaler Träger
- 4: erster vertikaler Träger
- 5: weiterer vertikaler Träger
- 6: erste Öffnung
- 7: zweite Öffnung
- 8: Befestigungsmittel
- 9: Tragrahmen für Vorvakuum-Pumpen
- 10: Tragrahmen für Prozessvakuum-Pumpen
- 11: Auflagevorrichtung
- 12: Befestigungsvorrichtung
- 13: Vorvakuum-Pumpe
- 14: Prozessvakuum-Pumpe
- 15: Auflagestrebe
- 16: Fuß

## Patentansprüche

1. Tragrahmen (9, 10) für einen Pumpenstand zur Aufnahme von Vakuumpumpen (13, 14) für eine Beschichtungsvorrichtung von Behältern mittels eines Beschichtungsverfahrens
mit einem Gestell,
- an dem Auflagestreben (15) ausgebildet sind, an denen über lösbare Verbindungen mindestens zwei Auflagevorrichtungen (11) angeordnet sind, auf denen jeweils lösbar eine Vakuumpumpe (13, 14) anbringbar ist, und
- mit Füßen (16), die sich von den untersten Auflagestreben (15) nach unten erstrecken und die lösbare Befestigungsvorrichtungen (12) zur Verbindung mit einem Haupttragrahmen (1) der Beschichtungsvorrichtung aufweisen;
wobei die Auflagevorrichtungen (11) einen rechteckigen Querschnitt aufweisen, der geringfügig größer ist als der Querschnitt eines Gabelzinken eines Hubwagens oder eines Gabelstaplers und die so weit voneinander in horizontaler Richtung beabstandet sind, dass die Gabelzinken eines Hubwagens oder eine Staplergabel eines Gabelstaplers in sie mit geringem Spiel einfahrbar sind,
**dadurch gekennzeichnet, dass** wenigstens eine Vakuumpumpe (13, 14) lösbar auf den Auflagevorrichtungen (11) angeordnet ist.

2. Tragrahmen (9 ,10) nach Patentanspruch 1, wobei er zwei Auflagevorrichtungen (11) zur Aufnahme von Vorvakuum-Pumpen (13) oder drei Auflagevorrichtungen (11) zur Aufnahme von Prozessvakuum-Pumpen (14) aufweist.

3. Haupttragrahmen (1) für eine Beschichtungsvorrichtung von Behältern mittels eines Beschichtungsverfahrens mit horizontalen Trägern (2, 3) und vertikalen Trägern (4, 5), die in einem Vakuumbereich so zueinander angeordnet sind, dass in einer Seitenfläche des Haupttragrahmens (1) eine erste Öffnung (6) gebildet wird, deren Höhe größer ist als die Höhe des Tragrahmens (9, 10) für einen Pumpenstand nach einem der vorstehenden Patentansprüche, sowie mit einem solchen Tragrahmen (9, 10) nach einem der vorstehenden Ansprüche.

4. Haupttragrahmen (1) nach Patentanspruch 3, wobei er eine erste Öffnung (6) hat, in der ein Tragrahmen (9) für Vorvakuum-Pumpen (13) angeordnet ist, und eine zweite, benachbart zur ersten Öffnung (6) ausgebildete zweite Öffnung (7) hat, in der ein Tragrahmen (10) für Prozessvakuum-Pumpen (14) angeordnet ist, wobei die beiden Öffnungen (6, 7) durch einen ersten vertikalen Träger (4) voneinander getrennt sind.

5. Haupttragrahmen (1) nach einem der vorstehenden Patentansprüche 3 oder 4, wobei er im Bereich der ersten Öffnung (6) und/oder der zweiten Öffnung (7) ein Bodenelement aufweist, das Befestigungsmittel (8) zur lösbaren Verbindung mit den Tragrahmen (9, 10) für einen Pumpenstand aufweist.

6. Haupttragrahmen (1) nach einem der vorstehenden Patentansprüche 3 bis 5, wobei er im Bereich der ersten Öffnung (6) und/oder der zweiten Öffnung (7) einen horizontalen unteren ersten Träger (2) aufweist, der mindestens in einer Teillänge einen Abstand zum Boden aufweist, der mindestens 3 cm, idealerweise mindestens 5 cm beträgt.

7. Haupttragrahmen (1) nach Patentanspruch 6, wobei die weiteren unteren Träger (3) ebenfalls horizontal ausgerichtet sind, aber keinen Abstand zum Boden aufweisen.

8. Haupttragrahmen (1) nach Patentanspruch 7, wobei die weiteren unteren horizontalen Träger (3) auf der Unterseite zum Boden flache Dämpfungs-oder Höhenausgleichselemente aufweisen.

9. Haupttragrahmen (1) nach einem der vorstehenden Patentansprüche 3 bis 8, wobei in dem Tragrahmen (9; 10) beziehungsweise den Tragrahmen (9, 10) alle für die Durchführung des Beschichtungsverfahrens notwendigen Vorvakuum-Pumpen (13) und Prozessvakuum-Pumpen (14) lösbar mit diesen verbunden sind.

10. Beschichtungsvorrichtung für Behälter, **dadurch gekennzeichnet, dass** ein Haupttragrahmen (1) nach einem der Patentansprüche 3 bis 8 vorgesehen ist.

11. Beschichtungsvorrichtung für Behälter nach Anspruch 10, **dadurch gekennzeichnet, dass** mindestens ein Tragrahmen (9, 10) nach einem der Ansprüche 1 oder 2 vorgesehen ist.

## Claims

1. Support frame (9, 10) for a pump station for holding vacuum pumps (13, 14) for a coating device of containers by means of a coating process comprising a rack,
- on which support struts (15) are formed, on which at least two support devices (11) are arranged by means of detachable connections, on each of which a vacuum pump (13, 14) can be attached in a detachable manner, and
- comprising feet (16) extending downwards from the lowest support struts (15), thereby comprising detachable fastening devices (12) for connecting to a main support frame (1) of the coating device;
wherein the support devices (11) have a rectangular cross-section slightly larger than the cross-section of a fork of a pallet truck or a forklift truck and which are sufficiently spaced apart in the horizontal direction in such a way that the forks of a pallet truck or a fork of a forklift truck can be retracted into them with little play,
**characterized in that**
at least one vacuum pump (13, 14) is arranged on the support devices (11) in a detachable manner.

2. Support frame (9, 10) according to Claim 1, wherein it comprises two support devices (11) for holding backing pumps (13) or three support devices (11) for holding process-vacuum pumps (14).

3. Main support frame (1) for a vessel coating device by means of a coating process with horizontal beams (2, 3) and vertical beams (4, 5), which are arranged in a vacuum area relative to each other in such a way that a first opening (6) is formed in a lateral surface of the main support frame (1), the height of which is greater than the height of the support frame (9, 10) for a pump station according to any one of the above claims, as well as with such a support frame (9, 10) according to any one of the preceding claims.

4. Main support frame (1) according to Claim 3, wherein it comprises a first opening (6) in which a support frame (9) for backing pumps (13) is arranged, and a second opening (7) adjacent to the first opening (6), in which a support frame (10) for process-vacuum pumps (14) is arranged, wherein those at the openings (6, 7) are separated from each other by a first vertical beam (4).

5. Main support frame (1) according to one of the preceding Claims 3 or 4, wherein it comprises a base element in the area of the first opening (6) and/or the second opening (7) comprising fastening means (8) for detachable connection with the support frames (9, 10) for a pump station.

6. Main support frame (1) according to any one of the preceding Claims 3 to 5, wherein it comprises a horizontal lower first beam (2) in the area of the first opening (6) and/or the second opening (7), which has a distance to the ground of at least one partial length, which is at least 3 cm, ideally being at least 5 cm.

7. Main support frame (1) according to Claim 6, wherein the other lower beams (3) are also horizontally aligned but are not distanced away from the ground at all.

8. Main support frame (1) according to Claim 7, wherein the other lower horizontal beams (3) comprise flat damping or height compensating elements on the bottom side towards the ground.

9. Main support frame (1) according to any one of the preceding Claims 3 to 8, wherein, in the support frame (9, 10) or in support frames (9, 10), all the backing vacuum pumps (13) and process-vacuum pumps (14) necessary for carrying out the coating process are detachably connected to them.

10. Coating device for containers, **characterized in that** a main support frame (1) is provided according to any one of the Claims 3 to 8.

11. The coating device for containers according to Claim 10, **characterized in that** at least one support frame (9, 10) is provided according to any one of the Claims 1 or 2.

## Revendications

1. Bâti de support (9, 10) pour groupe de pompage destiné à recevoir des pompes à vide (13, 14) pour un dispositif de revêtement de récipients au moyen d'un procédé de revêtement,
avec un cadre
- qui présente des entretoises d'appui (15) sur lesquelles sont agencés au moyen de fixations détachables au moins deux dispositifs d'appui (11) sur lesquels on peut respectivement fixer de façon amovible une pompe à vide (13, 14), et
- avec des pieds (16) qui, des entretoises d'appui inférieures (15), s'étendent vers le bas et présentent des dispositifs de fixation amovibles (12) permettant une fixation à un bâti principal (1) du dispositif de revêtement,
les dispositifs d'appui (11) présentant une section rectangulaire légèrement plus grande que la section d'un bras de fourche d'un chariot élévateur ou d'un gerbeur à fourche, et dont l'écartement horizontal est tel qu'il est possible d'y introduire avec un léger jeu les bras de fourche d'un chariot élévateur ou d'un gerbeur à fourche, **caractérisé en ce qu'**une pompe à vide (13, 14) au moins est agencée de façon amovible sur les dispositifs d'appui (11).

2. Bâti de support (9, 10) selon la revendication 1, lequel présente deux dispositifs d'appui (11) pour y agencer des pompes à vide préliminaire (13) ou trois dispositifs d'appui (11) pour y agencer des pompes à vide de procédé (14).

3. Bâti principal (1) pour dispositif de revêtement de récipients au moyen d'un procédé de revêtement avec des entretoises horizontales (2, 3) et des entretoises verticales (4, 5) lesquelles sont agencées l'une par rapport à l'autre dans une zone de vide de façon à former dans une face latérale du bâti principal (1) une première ouverture (6) dont la hauteur est supérieure à la hauteur du bâti (9, 10) pour le support d'un groupe de pompage selon l'une des revendications précédentes, et avec un tel bâti (9, 10) selon l'une des revendications précédentes.

4. Bâti principal (1) selon la revendication 3 doté d'une première ouverture (6) dans laquelle est agencé un bâti de support (9) pour des pompes à vide préliminaire (13), et d'une seconde ouverture (7) contiguë à la première ouverture (6) dans laquelle est agencé un bâti de support (10) pour des pompes à vide de procédé (14), les deux ouvertures (6, 7) étant séparées par une première entretoise (4) verticale.

5. Bâti principal (1) selon l'une des revendications précédentes 3 ou 4 présentant dans la zone de la première ouverture (6) et/ou de la seconde ouverture (7) un élément de fond doté de moyens de fixation (8) permettant un assemblage amovible avec le bâti de support (9, 10) pour un groupe de pompage.

6. Bâti principal (1) selon l'une des revendications précédentes 3 à 5 présentant dans la zone de la première ouverture (6) et/ou de la seconde ouverture (7) une première entretoise (2) horizontale inférieure qui, sur une partie au moins de sa longueur, présente par rapport au sol un écart d'au moins 3 cm, idéalement d'au moins 5 cm.

7. Bâti principal (1) selon la revendication 6, les autres entretoises inférieures (3) étant également orientées horizontalement mais ne présentant pas d'écart par rapport au sol.

8. Bâti principal (1) selon la revendication 7, les autres entretoises inférieures (3) présentant sur leur face inférieure au sol des éléments plats d'amortissement ou de compensation de hauteur.

9. Bâti principal (1) selon l'une des revendications précédente 3 à 8 dans lequel toutes les pompes à vide préliminaire (13) et toutes les pompes à vide de procédé (14) nécessaires à l'exécution du procédé de revêtement sont fixées de façon amovible dans le ou les bâtis de support (9, 10).

10. Dispositif de revêtement de récipients **caractérisé en ce qu'**un bâti principal (1) est prévu selon l'une des revendications 3 à 8.

11. Dispositif de revêtement de récipients selon la revendication 10 **caractérisé en ce qu'**un bâti de support (9, 10) au moins est prévu selon l'une des revendications 1 ou 2.
